(19) Europäisches Patentamt
European Patent Office
Office européen des brevets

(11) Veröffentlichungsnummer : **0 359 011 B1**

# (12) EUROPÄISCHE PATENTSCHRIFT

(45) Veröffentlichungstag der Patentschrift : **16.09.92 Patentblatt 92/38**

(51) Int. Cl.$^5$ : **C01B 7/07**

(21) Anmeldenummer : **89115755.4**

(22) Anmeldetag : **26.08.89**

## (54) Verfahren zur Abtrennung von Halogenkohlenwasserstoffen aus konzentrierter Salzsäure.

(30) Priorität : **31.08.88 DE 3829449**

(43) Veröffentlichungstag der Anmeldung : **21.03.90 Patentblatt 90/12**

(45) Bekanntmachung des Hinweises auf die Patenterteilung : **16.09.92 Patentblatt 92/38**

(84) Benannte Vertragsstaaten : **BE DE ES FR GB IT NL**

(56) Entgegenhaltungen :
**DE-B- 1 112 969**
**US-A- 2 558 011**
**US-A- 3 347 021**

(73) Patentinhaber : **HOECHST AKTIENGESELLSCHAFT**
**Postfach 80 03 20**
**W-6230 Frankfurt am Main 80 (DE)**

(72) Erfinder : **Lendle, Wilhelm, Dr.**
**Hirschpfad 5**
**W-6232 Bad Soden am Taunus (DE)**
Erfinder : **Scheibitz, Wolfgang, Dr.**
**Bolongarostrasse 37**
**W-6230 Frankfurt am Main 80 (DE)**
Erfinder : **Tetzlaff, Heribert, Dr.**
**Geisenheimer Strasse 88**
**W-6000 Frankfurt am Main 71 (DE)**
Erfinder : **Wojtech, Bernhard, Dr.**
**Kelkheimer Strasse 67**
**W-6232 Bad Soden am Taunus (DE)**

EP 0 359 011 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft ein Verfahren zur Abtrennung von Halogenkohlenwasserstoffen aus konzentrierter Salzsäure.

Bei der Methanchlorierung oder der Fluorchlorkohlenwasserstoff-Herstellung fallen Salzsäuren an, die durch Chlorkohlenwasserstoffe, Fluorkohlenwasserstoffe oder Fluorchlorkohlenwasserstoffe verunreinigt sind.

Vor der wirtschaftlichen Nutzung dieser Salzsäuren müssen diese organischen Verunreinigungen abgetrennt werden.

In der US-A-3,597,167 ist ein Reinigungsverfahren beschrieben, bei dem in der Salzsäure gelöste organische Verunreinigungen durch Adsorption an Kohle, Silicaten oder Aluminiumsilikaten entfernt werden. Nachteilig ist hierbei die notwendige Abtrennung und Wiederaufbereitung des Adsorbens.

In der US-A-4,263,269 wird die Entfernung von organischen Verunreinigungen durch eine destillative Trennung vorgeschlagen. Nachteilig ist der hierfür nötige hohe Energieaufwand.

Es ist ferner gemäß US-A-3 347021 und US-A- 2558011 bekannt, chlororganische Verunreinigungen aus Chlorwasserstoffgas durch Absorption unter Verwendung von Paraffinen zu entfernen.

Es bestand die Aufgabe, ein Verfahren zur Abtrennung von Halogenkohlenwasserstoffen aus konzentrierter Salzsäure anzugeben, das mit geringem Aufwand wirtschaftlich betrieben werden kann und zu einer Salzsäure führt, die im wesentlichen frei ist von Halogenkohlenwasserstoffen und wobei die abgetrennten Halogenkohlenwasserstoffe in den Destillationsschritt des ursprünglichen Herstellprozesses rückgeführt werden können.

Unter den Begriff "konzentrierte Salzsäure" sollen dabei solche Salzsäuren fallen, die 10 bis 37 Gew%, insbesondere 20 bis 35 Gew% Chlorwasserstoff enthalten. Unter "Halogenkohlenwasserstoffen" werden insbesondere die Verbindungen Mono-, Di-, Tri- und Tetra-chlormethan, Tri- und Per-chlorethylen sowie 1,1,2-Trichlor-1,2,2-trifluorethan und 1,2-Dichlor-1-fluorethan verstanden.

Die gestellte Aufgabe konnte überraschenderweise dadurch gelöst werden, daß man die Halogenkohlenwasserstoffe mit Paraffinen oder Paraffin-Wachsen extrahierte.

Gegenstand der Erfindung ist demgemäß ein Verfahren zur Abtrennung von Halogenkohlenwasserstoffen aus konzentrierter Salzsäure, das dadurch gekennzeichnet ist, daß man die Halogenkohlenwasserstoffe durch eine Extraktion mit Paraffinen oder Paraffin-Wachsen als Extraktionsmitteln abtrennt.

Das erfindungsgemäße Verfahren wird vorzugsweise so durchgeführt, daß man mindestens eine der folgenden Maßnahmen ergreift:

a) als Extraktionsmittel verzweigt- oder unverzweigtkettige Paraffine mit 7 bis 32 C-Atomen einsetzt;
b) als Extraktionsmittel Paraffin-Wachse mit Tropfpunkten von 70 bis 160°C einsetzt;
c) Paraffin-Wachse mit Tropfpunkten von 100 bis 125°C einsetzt;
d) als Extraktionsmittel Paraffingemische einsetzt;
e) als Extraktionsmittel Gemische aus Paraffinen mit 12 bis 18 C-Atomen verwendet (im folgenden auch $C_{12}$-$C_{18}$-Paraffingemische genannt);
f) als Extraktionsmittel Lösungen aus Paraffin-Wachsen und $C_{18}$-$C_{18}$-Paraffingemischen verwendet;
g) 1 bis 50 Teile bei Zimmertemperatur feste Paraffine in 100 Teilen $C_{12}$-$C_{18}$-Paraffingemischen löst und diese Lösung als Extraktionsmittel einsetzt;
h) 1 bis 50 Teile Paraffin-Wachse in 100 Teilen $C_{12}$-$C_{18}$-Paraffingemischen löst und diese Lösung als Extraktionsmittel einsetzt;
i) die Extraktion als kontinuierlich betriebene Gegenstromextraktion ausführt;
k) die Extraktion als Kreuzstromextraktion ausführt;
l) ein Volumen-Verhältnis Extraktionsgut : Extraktionsmittel = 10 : 1 bis 2 : 1 einstellt;
m) die Extraktion bei einer Temperatur von 0 bis 110°C durchführt;
n) den Extrakt (Halogenkohlenwasserstoffe) aus dem Extraktionsmittel durch eine Destillation gewinnt und das so regenerierte Extraktionsmittel in die Extraktion rückführt.

Bei der Extraktion können Extraktionstemperaturen von über 110°C dann vorteilhaft sein, wenn langkettige Paraffine oder Paraffin-Wachse mit hohem Tropfpunkt als Extraktionsmittel eingesetzt werden. Die Extraktion ist dann als Druckextraktion auszuführen.

Die n-Paraffine mit 10 bis 35 C-Atomen ergeben verbesserte Extraktionswerte gegenüber den iso-Paraffinen.

Der Verteilungkoeffizient ist definiert als

$$V = \frac{C_{org.}}{C_{säure}}$$

$C_{org.}$ = Konzentration des Halogenkohlenwasserstoffs in der Paraffin- bzw. Paraffin-Wachs-Phase

[g/100g Phase]

$C_{säure}$ = Konzentration des Halogenkohlenwasserstoffs in der Salzsäure-Phase [g/100g Salzsäure]

Das Phasen-Volumen-Verhältnis ist definiert als S : P = [l] Salzsäure : [l] Paraffin bzw. [l] Paraffin-Wachs. Unter Extraktionsgrad wird verstanden, wieviel Halogenkohlenwasserstoff aus der Salzsäure extrahiert ist. Der Extraktionsgrad wird berechnet als

$$E\% = 100 \cdot \frac{\text{Chlorkohlenwasserstoffmenge in der unbehandelten Salzsäure [g] minus Chlorkohlenwasserstoffmenge in der Salzsäure nach Extraktion [g]}}{\text{Chlorkohlenwasserstoffmenge in der unbehandelten Salzsäure [g]}}$$

Mit dem erfindungsgemäßen Verfahren ist es nunmehr möglich, in Salzsäure gelöste Halogenkohlenwasserstoffe mit geringem wirtschaftlichem Aufwand weitgehend abzureichern. Die Salzsäure kann in dieser gereinigten Form wirtschaftlich genutzt und die extrahierten Halogenkohlenwasserstoffe in den Destillationsschritt des ursprünglichen Herstellprozesses rückgeführt werden. Die Löslichkeit der Paraffine bzw. Paraffin-Wachse in Salzsäure liegt unter 1 ppm, beispielsweise beträgt der Gehalt an Undecan in der Salzsäure weniger als 5 ppb.

Die Erfindung wird anhand der Beispiele näher erläutert:

## Beispiel 1

Bestimmung des Verteilungskoeffizienten verschiedener Extraktionsmittel.

In einem Glaskolben mit Rührer wurden jeweils 5 l 31 Gew%ige Salzsäure mit 1 l Extraktionsmittel intensiv durch Rühren vermischt. Die Temperatur wurde mittels eines Wärmetauschers eingestellt. Die Salzsäure enthielt

182 ppm $CHCl_3$
257 ppm $CH_2Cl_2$
42 ppm $CHCl_3$
146 ppm $CCl_4$.

Nach der Gleichgewichtseinstellung wurden die Phasen absitzen gelassen und analytisch die einzelnen Halogenkohlenwasserstoffgehalte in der Salzsäure- sowie der Paraffin- bzw. Paraffin-Wachs-Phase bestimmt.

Die Ergebnisse sind in der Tabelle zusammengefaßt.

| Extraktionsmittel | Temp. (°C) | Phasen-Volumen-Verhältnis S:P | Verteilungskoeffizient $Ch_3Cl$ | $CH_2Cl_2$ | $CHCl_3$ | $CCl_4$ |
|---|---|---|---|---|---|---|
| n-Dodekan | 25 | 5:1 | 6,4 | 17,4 | 95,2 | 3340 |
| Paraffin-Gemisch ($C_{12}$-$C_{18}$) | 25 | 6:1 | 30 | 34 | 129 | 1635 |
| Paraffin-Wachs (Tropfpunkt 100-105°C) 5,6 Gew.-% gelöst in Paraffin-Gemisch ($C_{12}$-$C_{18}$) | 80 | 5:1 | 148 | 43 | 163 | $>$ 1190 |
| Paraffin-Wachs (Tropfpunkt 117-122°C) 5,6 Gew.-% gelöst in Paraffin-Gemisch ($C_{12}$-$C_{18}$) | 80 | 5:1 | 275 | 88 | 184 | $>$ 1206 |
| Paraffin-Wachs (Tropfpunkt 158°C) 5,9 Gew.-% gelöst in Paraffin-Gemisch ($C_{12}$-$C_{18}$) | 80 | 5:1 | 109 | 38 | 111 | $>$ 1020 |
| Docosan ($C_{22}$) 40 Gew.-% gelöst in Paraffin-Gemisch ($C_{12}$-$C_{18}$) | 50 | 5:1 | 19,6 | 16,6 | 61 | 363 |
| Dotriacontan ($C_{32}$) 20 Gew.-% gelöst in Paraffin-Gemisch ($C_{12}$-$C_{18}$) | 50 | 5:1 | 17,8 | 18,6 | 57 | 540 |

Beispiel 2 (Kreuzstromextraktion)

In einer 2-stufigen Kreuzstromextraktion wurde Salzsäure (die Qualität der Salzsäure war identisch mit der des Beispiels 1) mit einem Paraffin/Paraffin-Wachs-Gemisch bei 80°C behandelt. Das Paraffin/Paraffin-Wachs-Gemisch bestand aus 94,4 Gew% $C_{12}$-$C_{18}$-Paraffingemisch und 5,6 Gew% Paraffin-Wachs mit einem Tropfpunkt von 117 - 122°C (Polyethylen-Wachs Hoe PE 520 der Firma Hoechst AG, Frankfurt). Es wurde ein Phasen-Volumen-Verhältnis S : P = 5 : 1 eingestellt.
Folgende Abreicherungen und Extraktionsgrade wurden erzielt:

| | | | | | | | |
|---|---|---|---|---|---|---|---|
| $CH_3Cl$ | von | 182 | ppm | auf | 0,4 ppm, | d.h. | 99,4 % |
| $CH_2Cl_2$ | von | 257 | ppm | auf | 2,9 ppm, | d.h. | 98,9 % |
| $CHCl_3$ | von | 42 | ppm | auf | 0,5 ppm, | d.h. | 98,8 % |
| $CCl_4$ | von | 14,6 | ppm | auf | <0,1 ppm, | d.h. | >99,3 % |

Beispiel 3 (Kreuzstromextraktion)

Es wurde Beispiel 2 bei 50°C wiederholt, wobei ein Extraktionsmittelgemisch aus 20 Gew% Dotriacontan und 80 Gew% $C_{12}$-$C_{18}$-Paraffingemisch eingesetzt wurde. Folgende Abreicherungen und Extraktionsgrade wurden erzielt:

| | | | | | | | |
|---|---|---|---|---|---|---|---|
| $CH_3Cl$ | von | 182 | ppm | auf | 13 ppm, | d.h. | 92,9 % |
| $CH_2Cl_2$ | von | 257 | ppm | auf | 24 ppm, | d.h. | 90,7 % |
| $CHCl_3$ | von | 42 | ppm | auf | 1,6 ppm, | d.h. | 96,2 % |
| $CCl_4$ | von | 14,6 | ppm | auf | < 0,1 ppm, | d.h. | >99,3 % |

Beispiel 4 (Gegenstromextraktion)

In einer 5-stufigen Gegenstromextraktion wurde Salzsäure (die Qualität der Salzsäure war identisch mit der des Beispiels 1) mit $C_{12}$-$C_{18}$-Paraffingemisch bei 25°C und einem Phasen-Volumen-Verhältnis S : P = 2 : 1 extrahiert.

Es wurden folgende Abreicherungen und Extraktionsgrade erzielt:

| | | | | | | | |
|---|---|---|---|---|---|---|---|
| $CH_3Cl$ | von | 182 | ppm | auf | 500 ppb, | d.h. | 99,7 % |
| $CH_2Cl_2$ | von | 257 | ppm | auf | <200 ppb, | d.h. | >99,9 % |
| $CHCl_3$ | von | 42 | ppm | auf | 500 ppb, | d.h. | 98,8 % |
| $CCl_4$ | von | 14,6 | ppm | auf | 2 ppb, | d.h. | 99,99 % |

Beispiel 5 (Feststoffadsorption)

In einem Glaskolben mit Rührer wurde eine 20 Gew.-%ige Salzsäure und festes Paraffin-Wachs mit einem Tropfpunkt von 100 - 105°C intensiv verrührt. Bei dem Paraffin-Wachs handelte es sich um das Polyethylen-Wachs Hoe PED 522 der Firma Hoechst AG, Frankfurt, in der üblichen Korngrößenverteilung. Die Behandlungstemperatur betrug 25°C; das Phasen-Volumen-Verhältnis betrug 2 Liter Salzsäure pro 1 Kilogramm Paraffin-Wachs.
Es wurden folgende Abreicherungen und Extraktionsgrade erzielt:

| | | | | |
|---|---|---|---|---|
| $CHCl_3$ | von 234 ppm | auf 181 ppm, | d.h. | 22,7 % |
| $CH_2Cl_2$ | von 298 ppm | auf 189 ppm, | d.h. | 36,6 % |
| $CHCl_3$ | von 73 ppm | auf 30 ppm, | d.h. | 58,9 % |
| $CCl_4$ | von 44 ppm | auf 4,1 ppm, | d.h. | 90,7 % |

Beispiel 6

In einem Glaskolben mit Rührer wurden 3 l 31 Gew.-%ige Salzsäure mit 1 l $C_{14}$-$C_{18}$-Paraffingemisch intensiv durch Rühren bei 25°C vermischt und anschließend die Phasen durch Absitzenlassen getrennt.
Es wurden folgende Abreicherungen und Extraktionsgrade erzielt:

| | | | | |
|---|---|---|---|---|
| 1,2-Dichlor-1-fluorethan (R 141) | von 997 ppm | auf 259 ppm, | d.h. | 74,0 % |
| Trichlor-ethylen | von 1307 ppm | auf 17 ppm, | d.h. | 98,7 % |
| Perchlor-ethylen | von 915 ppm | auf 4 ppm, | d.h. | 99,6 % |
| $CCl_4$ | von 716 ppm | auf 5 ppm, | d.h. | 99,3 % |
| $CHCl_3$ | von 713 ppm | auf 60 ppm, | d.h. | 91,6 % |
| $CH_2Cl_2$ | von 884 ppm | auf 260 ppm, | d.h. | 70,6 % |

Beispiel 7

Das Beispiel 6 wurde wiederholt mit der Änderung, daß jetzt die Extraktion bei 80°C durchgeführt wurde.
Es wurden folgende Abreicherungen und Extraktionsgrade erzielt:

| | | | | |
|---|---|---|---|---|
| Trichlor-ethylen | von 1307 ppm | auf 21 ppm, | d.h. | 98,4 % |
| Perchlor-ethylen | von 915 ppm | auf 6 ppm, | d.h. | 99,3 % |
| $CCl_4$ | von 716 ppm | auf 6 ppm, | d.h. | 99,2 % |
| $CHCl_3$ | von 713 ppm | auf 46 ppm, | d.h. | 93,5 % |
| $CH_2Cl_2$ | von 884 ppm | auf 179 ppm, | d.h. | 79,8 % |

Beispiel 8

In einem Glaskolben mit Rührer werden 3 l 31 Gew.-%ige Salzsäure mit einem Paraffin/Paraffin-Wachs-Gemisch, bestehend aus 95 Gew.-% $C_{12}$-$C_{18}$-Paraffingemisch und 5 Gew.-% Paraffin-Wachs mit einem Tropfpunkt von 117 bis 122°C (Polyethylenwachs Hoe PE 520 der Firma Hoechst AG, Frankfurt) bei 80°C intensiv gemischt und anschließend die Phasen durch Absitzenlassen getrennt.
Es wurden folgende Abreicherungen und Extraktionsgrade erzielt:

| | | | |
|---|---|---|---|
| Perchlor-ethylen | von 915 ppm | auf 6 ppm, | d.h. 99,3 % |
| $CCl_4$ | von 716 ppm | auf 5 ppm, | d.h. 99,3 % |
| $CHCl_3$ | von 713 ppm | auf 39 ppm, | d.h. 94,5 % |
| $CH_2Cl_2$ | von 804 ppm | auf 171 ppm, | d.h. 78,7 % |

Beispiel 9

In einem Glaskolben mit Rührer wurden 3 l 31 Gew.-%ige Salzsäure mit 1 l $C_{14}$-$C_{18}$-Paraffingemisch intensiv durch Rühren bei 0°C vermischt und anschließend die Phasen durch Absitzenlassen getrennt. Die Salzsäure war vorher bei 0°C mit 1,1,2-Trichlor-1,2,1-trifluorethan (R 113) begast worden.
Es wurde folgende Abreicherung und Extraktionsgrad an R113 erzielt:

R 113 von 360 ppm auf 2 ppm, d.h. 99,4 %.

## Patentansprüche

1. Verfahren zur Abtrennung von Halogenkohlenwasserstoffen aus konzentrierter Salzsäure, dadurch gekennzeichnet, daß man die Halogenkohlenwasserstoffe durch eine Extraktion mit Paraffinen oder Paraffin-Wachsen als Extraktionsmitteln abtrennt.

2. Verfahren nach Anspruch 1, dadurch gekennzeichnet, daß man als Extraktionsmittel verzweigt- oder unverzweigtkettige Paraffine mit 7 bis 32 C-Atomen einsetzt.

3. Verfahren nach Anspruch 1, dadurch gekennzeichnet, daß man als Extraktionsmittel Paraffin-Wachse mit Tropfpunkten von 70 bis 160°C einsetzt.

4. Verfahren nach Anspruch 3, dadurch gekennzeichnet, daß man Paraffin-Wachse mit Tropfpunkten von 100 - 125°C einsetzt.

5. Verfahren nach Anspruch 1 oder 2, dadurch gekennzeichnet, daß man als Extraktionsmittel Paraffingemische einsetzt.

6. Verfahren nach einem der Ansprüche 1, 2 oder 5, dadurch gekennzeichnet, daß man als Extraktionsmittel $C_{12}$-$C_{18}$-Paraffingemische einsetzt.

7. Verfahren nach einem der voranstehenden Ansprüche 1 bis 6, dadurch gekennzeichnet, daß man als Extraktionsmittel Lösung aus Paraffin-Wachsen und $C_{12}$-$C_{18}$-Paraffingemischen verwendet.

8. Verfahren nach Anspruch 1 oder 2, dadurch gekennzeichnet, daß man 1 bis 50 Teile bei Zimmertemperatur feste Paraffine in 100 Teilen $C_{12}$-$C_{18}$-Paraffingemischen löst und diese Lösung als Extraktionmittel einsetzt.

9. Verfahren nach einem der Ansprüche 1, 3 oder 7, dadurch gekennzeichnet, daß man 1 bis 50 Teile Paraffin-Wachse in 100 Teilen $C_{12}$-$C_{18}$-Paraffingemisch löst und diese Lösung als Extraktionsmittel einsetzt.

10. Verfahren nach einem der voranstehenden Ansprüche 1 - 9, dadurch gekennzeichnet, daß man die Extraktion als kontinuierlich betriebene Gegenstromextraktion ausführt.

11. Verfahren nach einem der voranstehenden Ansprüche 1 - 9, dadurch gekennzeichnet, daß man die Extraktion als Kreuzstromextraktion ausführt.

12. Verfahren nach einem der voranstehenden Ansprüche 1 - 11, dadurch gekennzeichnet, daß man ein Volumen-Verhältnis Extraktionsgut : Extraktionsmittel = 10 : 1 bis 2 : 1 einstellt.

**13.** Verfahren nach einem der voranstehenden Ansprüche 1 - 12, dadurch gekennzeichnet, daß man die Extraktion bei einer Temperatur von 0 bis 110°C durchführt.

**14.** Verfahren nach einem der voranstehenden Ansprüche 1 - 13, dadurch gekennzeichnet, daß man den Extrakt aus dem Extraktionsmittel durch eine Destillation gewinnt und das so regenerierte Extraktionsmittel in die Extraktion rückführt.

## Claims

**1.** A process for the separation of a halogenated hydrocarbon from concentrated hydrochloric acid which comprises separating the halogenated hydro-carbon by extraction with a paraffin or a paraffin wax as extracting agent.

**2.** The process as claimed in claim 1, wherein a branched-chain or straight-chain paraffin having 7 to 32 carbon atoms is used as extracting agent.

**3.** The process as claimed in claim 1, wherein a paraffin wax having a dropping point from 70 to 160°C is used as extracting agent.

**4.** The process as claimed in claim 3, wherein a paraffin wax having a dropping point of 100 - 125°C is used.

**5.** The process as claimed in claim 1 or 2, wherein a paraffin mixture is used as extracting agent.

**6.** The process as claimed in one of claims 1, 2 or 5, wherein a $C_{12}$-$C_{18}$-paraffin mixture is used as extracting agent.

**7.** The process as claimed in one of the preceding claims 1 to 6, wherein a solution of a paraffin wax and a $C_{12}$-$C_{18}$-paraffin mixture is used as extracting agent.

**8.** The process as claimed in claim 1 or 2, wherein 1 to 50 parts of a paraffin which is solid at room temperature are dissolved in 100 parts of a $C_{12}$-$C_{18}$-paraffin mixture and this solution is used as extracting agent.

**9.** The process as claimed in one of claims 1, 3 or 7, wherein 1 to 50 parts of a paraffin wax are dissolved in 100 parts of a $C_{12}$-$C_{18}$-paraffin mixture and this solution is used as extracting agent.

**10.** The process as claimed in one of the preceding claims 1 - 9, wherein the extraction is carried out as a continuously operated counterflow extraction.

**11.** The process as claimed in one of the preceding claims 1 - 9, wherein the extraction is carried out as a cross-flow extraction.

**12.** The process as claimed in one of the preceding claims 1 - 11, wherein the ratio by volume of extraction material : extracting agent is adjusted to be = 10 : 1 to 2 : 1.

**13.** The process as claimed in one of the preceding claims 1 - 12, wherein the extraction is carried out at a temperature from 0 to 110°C.

**14.** The process as claimed in one of the preceding claims 1 - 13, wherein the extract is isolated from the extracting agent by distillation and the extracting agent regenerated in this manner is recycled into the extraction.

## Revendications

1. Procédé de séparation d'hydrocarbures halogénés d'acide chlorhydrique concentré, procédé caractérisé en ce que l'on sépare ces hydrocarbures halogénés par une extraction avec des paraffines ou des cires de paraffines comme agents d'extraction.

2. Procédé selon la revendication 1, caractérisé en ce que l'on utilise comme agents d'extraction des paraffines à chaîne ramifiée ou non ayant de 7 à 32 atomes de carbone.

3. Procédé selon la revendication 1, caractérisé en ce que l'on utilise comme agents d'extraction des cires de paraffines ayant un point de goutte de 70 à 160°C.

4. Procédé selon la revendication 3, caractérisé en ce que l'on utilise des cires de paraffines ayant un point de goutte de 100 à 125°C.

5. Procédé selon la revendication 1 ou 2, caractérisé en ce que l'on utilise comme agents d'extraction des mélanges de paraffines.

6. Procédé selon l'une des revendications 1, 2 et 5, caractérisé en ce que l'on utilise comme agents d'extraction des mélanges de paraffines en $C_{12}$-$C_{18}$.

7 Procédé selon l'une des revendications précédentes 1 à 6, caractérisé en ce que l'on utilise comme agent d'extraction une solution de cires de paraffines et d'un mélange de paraffine en $C_{12}$-$C_{18}$.

8 Procédé selon la revendication 1 ou 2, caractérisé en ce que l'on utilise comme agent d'extraction une solution de 1 à 50 parties de paraffines solides à la température ambiante dans 100 parties d'un mélange de paraffines en $C_{12}$-$C_{18}$..

9 Procédé selon l'une des revendications 1, 3 et 7, caractérisé en ce que l'on utilise comme agent d'extraction une solution de 1 à 50 parties de cires de paraffines dans 100 parties d'un mélange de paraffines en $C_{12}$-$C_{18}$.

10 Procédé selon l'une des revendications 1 à 9 précédentes, caractérisé en ce que l'on effectue l'extraction à contre-courant en continu.

11 Procédé selon l'une des revendications 1 à 9, caractérisé en ce que l'on effectue l'extraction en courants croisés.

12 Procédé selon l'une des revendications 1 à 11, caractérisé en ce que l'on opère à un rapport volumique entre la matière à traiter et l'agent d'extraction compris entre 10 : 1 et 2 : 1.

13 Procédé selon l'une des revendications 1 à 12 précédentes, caractérisé en ce que l'on effectue l'extraction à une température de 0 à 110°C.

14 Procédé selon l'une des revendications 1 à 13, caractérisé en ce que l'on récupère l'extrait de l'agent d'extraction par une distillation et on recycle à l'extraction l'agent ainsi régénéré.